# EUROPÄISCHE PATENTSCHRIFT

(11) **EP 0 681 880 B1**
(45) Veröffentlichungstag und Bekanntmachung des Hinweises auf die Patenterteilung: **27.08.1997**
(21) Anmeldenummer: 95104089.8
(22) Anmeldetag: 20.03.1995
(51) Int. Cl.: B23B 31/00, B23Q 17/00

(54) **Werkzeugmaschine**
Machine tool
Machine-outil

(30) Priorität: 30.04.1994 DE 4415306
(43) Veröffentlichungstag der Anmeldung: 15.11.1995
(73) Patentinhaber: CHIRON-WERKE GMBH & CO. KG, 78532 Tuttlingen (DE)
(72) Erfinder: Rütschle, Eugen, Dipl.-Ing., D-78570 Mühlheim (DE); Winkler, Hans-Henning, Dr. Ing., D-78532 Tuttlingen (DE); Haninger, Rudolf, D-78606 Seitzingen (DE)
(74) Vertreter: Otten, Hajo, Dr.-Ing.

(56) Entgegenhaltungen:
- EP-A- 0 185 889
- DE-A- 4 031 991
- FR-A- 2 373 361
- US-A- 3 851 562
- US-A- 4 504 824

## Beschreibung

Die vorliegende Erfindung betrifft eine Werkzeugmaschine mit einer in einem Spindelstock umlaufenden Spindel, mit zumindest einem Greifer, der einen Werkzeughalter aus einer ungekuppelten Stellung in eine kuppelbare Stellung in die Spindel einsetzt, und mit Kupplungsmitteln zum Überführen des in der kuppelbaren Stellung befindlichen Werkzeughalters in einen gekuppelten Zustand, in dem der Werkzeughalter drehfest mit der Spindel verbunden ist, wobei eine Sensoreinrichtung zum Erkennen des eingenommenen gekuppelten Zustandes vorgesehen ist.

Eine derartige Werkzeugmaschine ist aus der DE-OS 40 31 991 bekannt.

Bei der bekannten Werkzeugmaschine wird ein Werkzeughalter mit einem eingespannten Werkzeug mittels eines Greifarmes in die Spindel eingesetzt. Der Werkzeughalter ist unter Reibung drehbar in dem Greifarm gehalten.

Um eine drehfeste Verbindung des Werkzeughalters mit der Spindel herzustellen, ist die dem Werkzeughalter zu weisende Stirnfläche der Spindel mit einem federnd gehaltenen Mitnehmer versehen. Die gegenüberliegende Stirnseite des bereits koaxial zu der Spindel ausgerichteten Werkzeughalters ist mit zwei Nuten versehen, die auf unterschiedlichen Radien liegen, so daß nur eine Nut zur Aufnahme des Mitnehmers geeignet ist. Beim Einsetzen des Werkzeughalters in die sich drehende Spindel wird der Mitnehmer dabei in aller Regel nicht genau in die eine Nut treffen, sondern vielmehr auf der ansonsten glatten Stirnfläche des Werkzeughalters aufsetzen, so daß der Mitnehmer gegen die Kraft der Feder in die Spindel zurückgedrückt wird. Durch den Mitnahmeeffekt des Mitnehmers und wegen der Reibung des Werkzeughalters in dem Greifer stellt sich jetzt eine Relativbewegung zwischen dem Werkzeughalter und dem Mitnehmer ein, so daß dieser auf der Stirnfläche des Werkzeughalters entlanggleitet und schließlich die entsprechende Nut "findet".

Dem Mitnehmer ist eine längsverschieblich an der Spindel gelagerte Signalstange zugeordnet, die der relativen Bewegung des Mitnehmers zu der Spindel folgt. Ferner ist an der Spindel ein konzentrischer Signalring gelagert, der der Bewegung der Signalstange folgt, so daß er sich bei in kuppelbarer Stellung befindlichem Werkzeughalter in einer axial ersten Stellung befindet und bei in gekuppeltem Zustand befindlichem Werkzeughalter eine axial zweite Stellung einnimmt. Ferner ist ein ortsfester Meßwertaufnehmer vorgesehen, der derart mit dem Signalring zusammenwirkt, daß er die beiden unterschiedlichen axialen Stellungen unterscheiden kann.

Der Meßwertaufnehmer meldet folglich während des Einsetzens des Werkzeughalters in die Spindel zunächst, daß sich der Mitnehmer in seiner axial unteren Position befindet, was bedeutet, daß sich kein Werkzeughalter in der Spindel befindet. Bei dem Einsetzen des Werkzeughalters in die Spindel wird der Signalring nun nach oben gedrückt, so daß der Meßwertaufnehmer meldet, daß sich ein Werkzeughalter in einer kuppelbaren Stellung befindet. Wenn der Mitnehmer jetzt in "seine" Nut eingegriffen hat, fällt der Signalring in seine untere Stellung zurück, was der Meßwertaufnehmer erkennt. Diese Signalabfolge des Meßwertaufnehmers wird von einer Ablaufsteuerung verarbeitet, die unmittelbar nach der Einnahme des gekuppelten Zustandes die Drehzahl der Spindel auf Betriebsdrehzahl hochfährt.

Durch die Überwachung des Mitnehmers wird also ein sehr schnelles Einkoppeln der Werkzeuge erreicht.

Dadurch, daß nur eine der beiden Nuten auf dem richtigen Durchmesser liegt, so daß der Mitnehmer nur in diese Nut eingreifen kann, ist das Werkzeug immer "richtig" zur Spindel orientiert. Diese Orientierung ist z.B. beim Arbeiten mit Drehstählen wichtig, die beim Rückzug aus einer Bohrung richtig orientiert sein müssen, damit keine Rückzugsriefen entstehen.

Bei der bekannten Werkzeugmaschine wird es als nachteilig angesehen, daß die Werkzeugwechselzeit stark von der zufälligen Lage abhängt, mit der der Greifer den Werkzeughalter in die Spindel einsetzt. Der Mitnehmer kann z.B. schon nach einer sehr kurzen Relativdrehung zwischen Spindel und Werkzeughalter in die richtige Nut einfallen, diese Relativdrehung kann aber auch bis zu fast 360° betragen. Insbesondere bei einem im Greifer relativ ungebremst sich drehenden Werkzeughalter kann die Relativgeschwindigkeit zwischen Werkzeughalter und Spindel gering sein, so daß der Werkzeugwechsel doch noch sehr lange dauert.

Ausgehend hiervon ist es Aufgabe der vorliegenden Erfindung, eine Werkzeugmaschine von der eingangs genannten Art dahingehend weiterzubilden, daß die Werkzeugwechselzeit verkürzt wird, ohne den konstruktiven Aufwand übermäßig zu erhöhen.

Erfindungsgemäß wird diese Aufgabe bei der eingangs genannten Werkzeugmaschine dadurch gelöst, daß zumindest zwei gekuppelte Zustände vorgesehen sind, die sich bezüglich einer relativen winkelmäßigen Ausrichtung zwischen dem Werkzeughalter und der Spindel voneinander unterscheiden, und daß die Sensoreinrichtung dazu ausgelegt ist, die gekuppelten Zustände voneinander zu unterscheiden.

Die der Erfindung zugrunde liegende Aufgabe wird auf diese Weise vollkommen gelöst. Zwei gekuppelte Zustände bedeuten nämlich, daß z.B. zwei Nuten vorgesehen sind, die einander diametral gegenüberliegen, sich aber auf dem gleichen Durchmesser befinden, so daß der Mitnehmer in beide Nuten eingreifen kann. Die maximal erforderliche Relativdrehung zwischen Spindel und Werkzeughalter reduziert sich also von 360° auf 180°, wird also bei zwei gekuppelten Zuständen halbiert. Es kann aber auch vorgesehen sein, daß der Mitnehmer in zwei Nuten eingreifen kann, die auf unterschiedlichen Radien liegen, indem z.B. der Mitnehmer mit einer reduzierten Außenkontur versehen wird. Dann können standardisierte Werkzeughalter verwendet werden.

Die Ablaufsteuerung der Werkzeugmaschine weiß nun aber nicht, in welcher Orientierung sich der Werkzeughalter zu der Spindel befindet, was bei dem oben erwähnten Arbeiten z.B. mit Drehstählen von Nachteil ist.

Der Erfinder hat jedoch erkannt, daß er die bekannte Sensoreinrichtung mit geringem Aufwand überraschenderweise so weiterentwickeln kann, daß diese die verschiedenen gekuppelten Zustände voneinander unterscheiden kann. Auf diese Weise kann der Ablaufsteuerung eine Information darüber zur Verfügung gestellt werden, wie die Orientierung zwischen dem Werkzeughalter und damit dem Werkzeug und der Spindel ist.

Bei zwei gekuppelten Zuständen wird dieser Anteil der Werkzeugwechselzeit also halbiert, bei drei gekuppelten Zuständen auf ein Drittel reduziert, etc.

Dabei ist es bevorzugt, wenn die Kupplungsmittel einen an der Spindel gelagerten und zwischen zumindest drei Lagen relativ zu der Spindel verschiebbaren Mitnehmer umfassen, der in einem gekuppelten Zustand des Werkzeughalters in eine der an diesem vorgesehenen Ausnehmungen eingreift, und wenn der Sensor die relative Lage des Mitnehmers zu der Spindel erkennt, wobei der Mitnehmer in die verschiedenen Ausnehmungen unterschiedlich, vorzugsweise unterschiedlich weit eingreift.

Die Maßnahme ist insbesondere deshalb vorteilhaft, weil das Überwachung und Unterscheiden der eingekuppelten Zustände auf einfache Weise vor sich geht. Zum einen erkennt die Sensoreinrichtung, wenn der Mitnehmer z.B. mit einer Stirnfläche oder Mantelfläche des Werkzeughalters in Anlage und somit in die Spindel hineingedrückt ist. Der Sensor kann also melden, daß sich der Werkzeughalter in der kuppelbaren Stellung befindet, was er an der relativen Lage des Mitnehmers erkennt. Wenn der Mitnehmer jetzt an der Stirnfläche entlanggleitet und in eine Nut einrastet, so erkennt der Sensor auch dieses Einrasten, wobei vorzugsweise die Tiefe des Einrastens eine Information darüber bereitstellt, in welchem gekuppelten Zustand, also in welcher relativen Orientierung zu der Spindel, sich der Werkzeughalter und damit das in ihm gehaltene Werkzeug befindet. Die beiden Ausnehmungen können den Mitnehmer z.B. jedoch auch unterschiedlich verdrehen, wobei die Sensoreinrichtung auf die Drehrichtung anspricht.

Weiterhin ist es bevorzugt, wenn die Sensoreinrichtung zumindest einen mit der Spindel umlaufenden Signalgeber umfaßt.

Diese an sich bekannte Maßnahme ist besonders vorteilhaft, weil der Signalgeber sozusagen immer "vor Ort" ist, und nicht erst im ungünstigsten Falle ein Abschnitt der Umdrehung der Spindel abgewartet werden muß, bis die Sensoreinrichtung den jeweiligen Zustand erkennt.

Ferner ist es bevorzugt, wenn die Sensoreinrichtung eine dem Signalgeber zugeordnete Erfassungseinrichtung aufweist, die bezüglich des Spindelstockes drehfest angeordnet ist.

Diese auch an sich bekannte Maßnahme ist insofern von Vorteil, als die Erfassungseinrichtung auf konstruktiv einfache Weise angeordnet werden kann. Als Erfassungseinrichtung kann beispielsweise ein optischer Empfänger vorgesehen sein, der einen von dem Signalgeber ausgehenden oder auch nur reflektierten Lichtstrahl detektiert.

Weiterhin ist es bevorzugt, wenn die Erfassungseinrichtung in jeder relativen Winkellage zwischen der Spindel und dem Spindelstock auf den Signalgeber anspricht.

Die Maßnahme ist besonders vorteilhaft, weil das Einkoppeln an die Erfassungseinrichtung gemeldet wird, sobald der Kuppelvorgang abgeschlossen ist.

Hierbei ist es besonders bevorzugt, wenn der Signalgeber zumindest eine längsverschieblich an der Spindel gelagerte Signalstange aufweist, die dem Mitnehmer zugeordnet ist und der zu der Spindel relativen Bewegung des Mitnehmers folgt.

Bei dieser an sich ebenfalls bekannten Maßnahme ist von Vorteil, daß keine Signallaufzeit zwischen dem Einrasten des Mitnehmers in die Nut und dem Melden des Signalgebers vergeht, der Mitnehmer selbst bildet sozusagen einen Teil des Signalgebers.

Insgesamt ist es bevorzugt, wenn die Erfassungseinrichtung zumindest zwei Signalgeber umfaßt, die das unterschiedliche Eingreifen des Mitnehmers in die Aufnehmungen erfassen.

Hier ist von Vorteil, daß auf konstruktiv einfache Weise mit zwei Signalgebern drei unterschiedliche Zustände des Mitnehmers erfaßt werden können. Wenn die beiden Signalgeber zum Beispiel übereinander angeordnet sind, so zeigt der untere Signalgeber an, daß der Mitnehmer in die tiefere Nut eingedrungen ist, während der obere Signalgeber anzeigt, daß der Mitnehmer in die weniger tiefe Nut eingedrungen ist. Sind die Signalgeber nebeneinander angeordnet, kann der eine eine Drehung in eine erste und der andere eine Drehung in eine zweite Richtung erfassen. Es können aber auch unterschiedlich weite Drehungen in eine Richtung erfaßt werden.

Insgesamt ist es bevorzugt, wenn die Sensoreinrichtung einen zu der Spindel konzentrischen Signalring aufweist, der an der Spindel axial gelagert ist, und der mit den Kupplungsmitteln derart zusammenwirkt, daß der Signalring bei in kuppelbarer Stellung befindlichem Werkzeughalter eine axial erste Stellung einnimmt und kontinuierlich mit zumindest zwei ortsfesten Meßwertaufnehmern zusammenwirkt, wenn der Signalring bei in einem ersten gekuppelten Zustand befindlichem Werkzeughalter eine axial zweite Stellung einnimmt und ebenfalls kontinuierlich mit den Meßwertaufnehmern zusammenwirkt, und wenn der Signalring bei in einem zweiten gekuppelten Zustand befindlichem Werkzeughalter eine axial dritte Stellung einnimmt und mit den ortsfesten Meßwertaufnehmern zusammenwirkt.

Diese Maßnahme weist nicht nur den bereits diskutierten Vorteil der kontinuierlichen Signalübertragung zwischen dem Signalgeber und der Erfassungseinrichtung auf, es kann außer der bereits beschriebenen optischen auch eine einfache induktive Meßwertaufnahme erfolgen, wie sie bspw. aus der eingangs beschriebenen DE-OS-40 31 991 bekannt ist.

Weitere Vorteile ergeben sich aus der Beschreibung und der beigefügten Zeichnung.

Es versteht sich, daß die vorstehend genannten und nachstehend noch zu erläuternden Merkmale nicht nur in der jeweils angegebenen Kombination, sondern auch in anderen Kombinationen und in Alleinstellung verwendbar sind, ohne den Rahmen der vorliegenden Erfindung zu verlassen.

In der Zeichnung ist ein Ausführungsbeispiel der Erfindung dargestellt und in der nachfolgenden Beschreibung näher erläutert. Es zeigen:
- Fig. 1: eine schematische Schnittdarstellung längs der Spindelachse einer erfindungsgemäßen Werkzeugmaschine, im Ausschnitt und teilweise gebrochen, wobei sich der Werkzeughalter in einer ungekuppelten Stellung befindet;
- Fig. 2: eine Darstellung wie Fig. 1, wobei sich der Werkzeughalter jedoch in der kuppelbaren Stellung befindet;
- Fig. 3: eine vergrößerte Darstellung der Sensoreinrichtung 48 aus der Werkzeugmaschine gemäß Fig. 1, wobei sich der Werkzeughalter in einem zweiten gekuppelten Zustand befindet; und
- Fig. 4: eine schematische Darstellung einer zweiten Werkzeugmaschine mit Hohlschaft-Werkzeughalter, bei der der Werkzeughalter in einem gekuppelten Zustand ist.

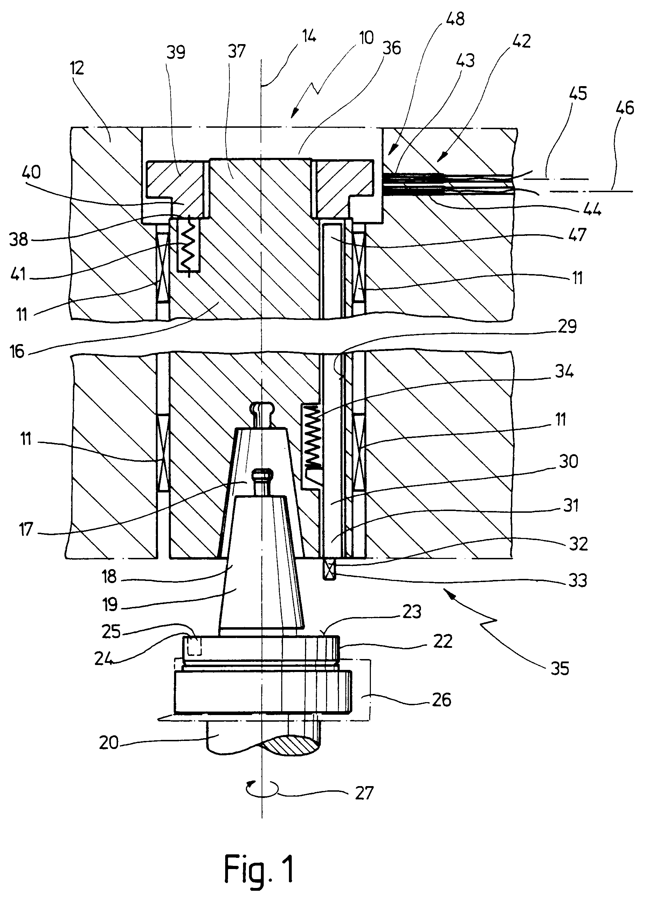

In Fig. 1 ist in einer schematischen Schnittdarstellung und im Ausschnitt eine Werkzeugmaschine 10 dargestellt. Die Werkzeugmaschine 10 umfaßt eine mittels Lagern 11 in einem Spindelstock 12 um ihre Spindelachse 14 drehbar gelagerte Spindel 16. Die Spindel 16 ist in an sich bekannter Weise mit einer in Fig. 1 nicht zu erkennenden Antriebseinrichtung verbunden. Für die Antriebseinrichtung ist eine ebenfalls nicht dargestellte Ablaufsteuerung vorgesehen, über die die Spindel auf verschiedene Drehzahlen gefahren werden kann.

Die Spindel weist an ihrem unteren Ende eine Aufnahme 17 für einen Werkzeughalter 18 auf, der in dem gezeigten Ausführungsbeispiel einen Steilkegel 19 umfaßt.

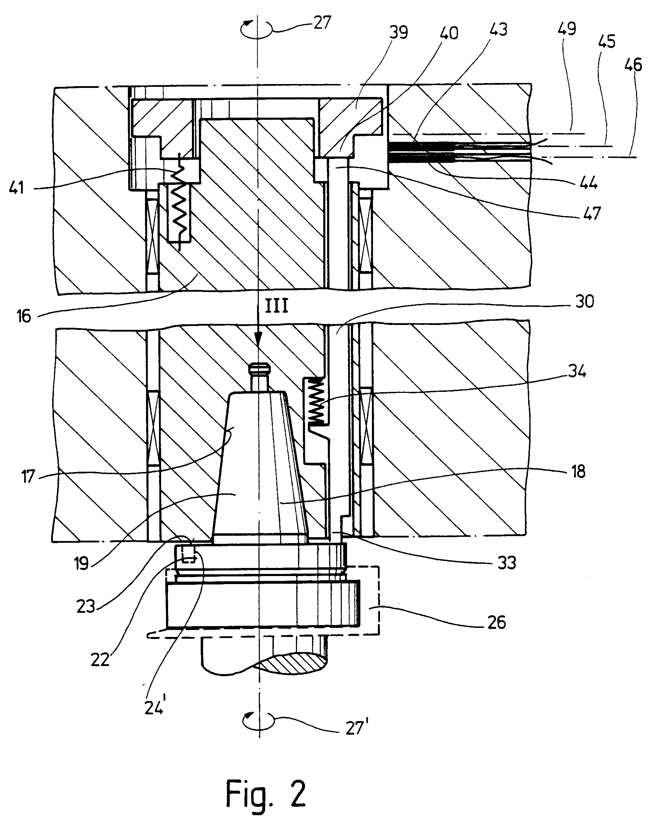

Der Werkzeughalter 18 weist an seinem von dem Steilkegel 19 wegweisenden Ende einen zylindrischen Schaft 20 auf, in dem ein in Fig. 1 nicht gezeigtes Werkzeug eingespannt ist. Etwa mittig zwischen dem Steilkegel 19 und dem zylindrischen Schaft 20 ist an dem Werkzeughalter 18 eine radial vorspringende Ringschulter 22 vorgesehen, die eine auf den Steilkegel 19 zu weisende ringförmig umlaufende Stirnfläche 23 trägt. In der Stirnfläche 23 ist eine bei 24 angedeutete Nut als Ausnehmung 25 vorgesehen, deren Funktion noch näher beschrieben werden wird. Der Werkzeughalter 18 weist in dem gezeigten Ausführungsbeispiel zwei Nuten 24, 24' (siehe Fig. 2) auf, die einander diametral gegenüberliegen und verschiedene Tiefen aufweisen.

Der Werkzeughalter 18 ist an sich ebenfalls bekannter Weise von einem bei 26 angedeuteten Greifer gehalten, der Teil eines ebenfalls nicht dargestellten Greifarmes ist. Mittels des Greifarmes kann der Werkzeughalter 18 beispielsweise aus einer Magazinposition entnommen und in die Aufnahme 17 der Spindel 16 eingesetzt werden.

In der in Fig. 1 gezeigten Stellung des Werkzeughalters 18 befindet sich dieser in axialer Ausrichtung zu der Spindelachse 14, ist aber noch nicht in einer Stellung, in der er mit der Spindel 16 kuppelbar ist. Die Spindel 16 selbst läuft jedoch bereits mit langsamer Kupplungsdrehzahl, wie dies bei 27 angedeutet ist.

In der Spindel 16 ist eine parallel zu der Spindelachse 14 verlaufende und die Spindel 16 in Längsrichtung durchsetzende Bohrung 29 vorgesehen, in der eine Signalstange 30 längsverschieblich geführt ist. Die Signalstange 30 dient als noch näher zu beschreibender Signalgeber 31 und weist an ihrem unteren Ende einen Mitnehmer 32 in Form eines Nutensteines 33 auf, der zum drehfesten Verriegeln des Werkzeughalters mit der Spindel 16 in eine der Nuten 24, 24' eingreifen soll. Die Signalstange 30 ist mittels einer bei 34 lediglich schematisch angedeuteten Druckfeder in die in Fig. 1 gezeigte Stellung vorgespannt, in welcher der Nutenstein 33 nach unten über die Spindel 16 herausragt. Der Mitnehmer 32 und die Druckfeder 34 entsprechen üblichen Kupplungsmitteln 35, die zum Kuppeln des Werkzeughalters 18 mit der Spindel 16 dienen.

Die Spindel 16 trägt an ihrem oberen, von der Aufnahme 17 abgelegenen Ende 36 einen zu der Spindelachse 14 konzentrischen zylindrischen Fortsatz mit geringerem radialem Durchmesser als die Spindel 16 selbst. Der zylindrische Fortsatz 37 geht unter Ausbildung einer Schulter 38 in die Spindel 16 über.

Auf dem zylindrischen Fortsatz 37 steckt ein stufiger Signalring 39, der zu der Spindel 16 konzentrisch ist und bei der in Fig. 1 gezeigten Stellung des Werkzeughalter 18 mit seinem unteren Ringflansch 40 auf der Schulter 38 aufliegt. Es ist zu erkennen, daß der Ringflansch 40 einen geringeren Außendurchmesser aufweist, als der Signalring 39. Der Signalring 39 und der einstückig mit diesem ausgebildete Ringflansch 40 sind in dem gezeigten Ausführungsbeispiel aus Messing gefertigt.

In der Spindel 16 sind längs ihres Umfanges verteilt Zugfedern 41 vorgesehen, von denen in Fig. 1 eine gezeigt ist. Die Zugfedern 41 sind einen Endes mit der Spindel 16 und anderen Endes mit dem Ringflansch 40 verbunden und ziehen so den Signalring 39 auf die Schulter 38.

Dem Signalring 39 ist eine Erfassungseinrichtung 42 zugeordnet, die ortsfest in dem Spindelstock 12 angeordnet ist. In dem gezeigten Ausführungsbeispiel umfaßt die Erfassungseinrichtung 42 zwei induktive Näherungsgeber 43, 44.

Wie in Fig. 1 zu erkennen ist, sind die induktiven Näherungsgeber 43, 44 drehfest mit dem Spindelstock 12 verbunden und befinden sich auf bei 45 bzw. 46 angedeuteten Höhen, die derart gewählt sind, daß der auf der Schulter 38 aufliegende Signalring 39 das Feld der induktiven Näherungsgeber 43, 44 optimal bedämpft. Obwohl die Spindel 16 mit Kupplungsdrehzahl 27 umläuft, wird auf diese Weise durch den Signalring 39 für eine dauernde Bedämpfung der Näherungsgeber 43, 44 gesorgt.

Weiterhin ist aus Fig. 1 zu entnehmen, daß die Bohrung 29, in der die Signalstange 30 geführt ist, in die Ringschulter 38 mündet, so daß die Signalstange 30 mit ihrem oberen Ende 47 mit dem Ringflansch 40 des Signalringes 39 in Anlage bringbar ist. Bei aus der Ausnehmung 17 herausgefahrenem Werkzeughalter 18 jedoch liegt der Ringflansch 40 auf der Schulter 38 auf und ist von der Signalstange 30 freigegeben. Der Ringflansch 40 kann jedoch dauernd auf der Signalstange 30 aufliegen und so mit Hilfe der Zugfedern 41 die Druckfeder 34 beim Nach-unten-Drücken der Signalstange 30 und damit des Nutensteines 33 unterstützen.

Auf diese Weise bildet der Signalgeber 31, der die Signalstange 30 und den Signalring 39 umfaßt, zusammen mit der Erfassungseinrichtung 42 eine Sensoreinrichtung 48, die in dem in Fig. 1 gezeigten Zustand anzeigt, daß der Mitnehmer 32 vollständig freigegeben ist.

Der Werkzeughalter 18 wird jetzt koaxial in die Ausnehmung 17 eingefahren, indem entweder der Halter 26 nach oben fährt, oder aber der Spindelstock 12 zusammen mit der Spindel 16 nach unten bewegt wird. Diese Stellung des Werkzeughalters 18 ist in Fig. 2 dargestellt.

Der Steilkegel 12 ist jetzt vollständig in die Ausnehmung 17 eingedrungen und der Nutenstein 33 ist mit der ringförmigen Stirnfläche 23 des Werkzeughalters 18 in Anlage gelangt. Beim Einschieben des Werkzeughalters 18 in die Ausnehmung 17 ist dabei die Signalstange 30 gegen die Kraft der Druckfeder 34 und der Zugfedern 41 nach oben bewegt worden und hat mit ihrem oberen Ende 47 den Ringflansch 30 und damit den Signalring 39 ebenfalls nach oben verschoben, so daß er sich jetzt auf einer bei 49 angedeuteten Höhe befindet, die oberhalt der Höhen 45 und 46 ist.

Wegen der doch relativ hohen Kupplungsdrehzahl 27 der Spindel 16 kann der Mitnehmer 32 bei der anfänglich großen Relativgeschwindigkeit zwischen stehendem Werkzeughalter 18 und rotierender Spindel 16 nicht schon in eine der Nuten 24, 24' einrasten, wenn der Werkzeughalter 18 die kuppelbare Stellung einnimmt, dies ist erst nach dem Einnehmen der in Fig. 2 gezeigten Stellung möglich, wenn der Werkzeughalter 18 durch den "Mitnahmeeffekt" des Nutensteines 33 hochbeschleunigt wird. Da der Werkzeughalter 18 in dem Greifer 26 jedoch unter Reibung gehalten wird, kann der Werkzeughalter 18 nicht die Kupplungsdrehzahl 27 erreichen.

Die induktiven Näherungsgeber 43, 44 liegen jetzt dem Ringflansch 40 gegenüber und sind nicht mehr von dem Signalring 39 bedämpft. Sie melden somit an die bereits erwähnte Ablaufsteuerung, daß sich der Werkzeughalter 18 in einer kuppelbaren Stellung befindet. Der Nutenstein 33 gleitet jetzt auf der Stirnfläche 23 entlang und "sucht" dabei eine der Nuten 24, 24'.

Wenn der Nutenstein 33 in die tiefere der beiden Nuten 24, 24' eingedrungen ist, so nimmt der Signalring 39 wieder die in Fig. 1 gezeigte Stellung ein und sorgt wieder für eine dauernde Bedämpfung der Näherungsgeber 43, 44. Der Werkzeughalter 18 ist jetzt drehfest mit der Spindel 16 verriegelt.

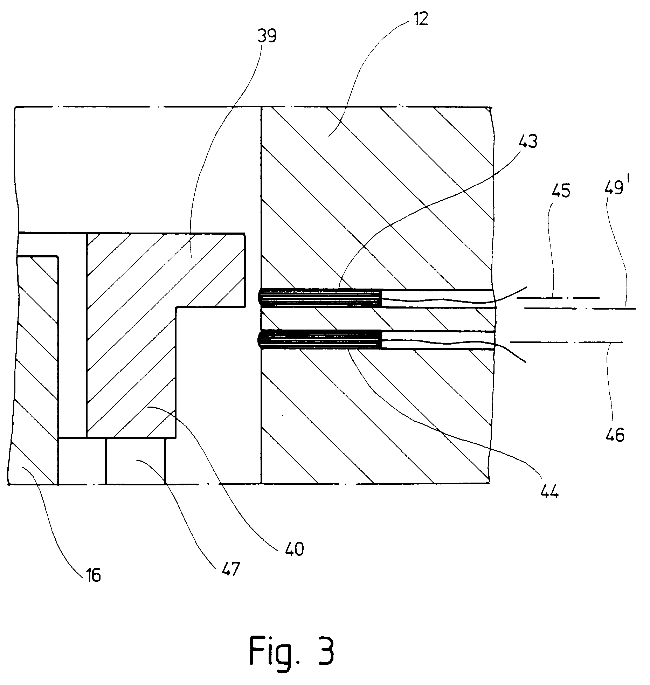

Ist der Nutenstein 33 dagegen in die nicht so tiefe der Nuten 24, 24' eingedrungen, so nimmt der Signalring 39 die in Fig. 3 gezeigte Stellung ein, bei der er sich auf einer Höhe 49' befindet, die zwischen den Höhen 45 und 46 liegt. Der Signalring 39 bedämpft jetzt lediglich den oberen Näherungsgeber 43, während der untere Näherungsgeber 44 immer noch unbedämpft ist. Diese beiden Informationen werden an die erwähnte Ablaufsteuerung weitergegeben, die jetzt erkennt, daß sich der Werkzeughalter 18 um 180° verdreht gegenüber seiner normalen 0-Position befindet. Diese Information wird berücksichtigt, wenn das Werkzeug lagerichtig zugestellt oder zurückgefahren werden soll.

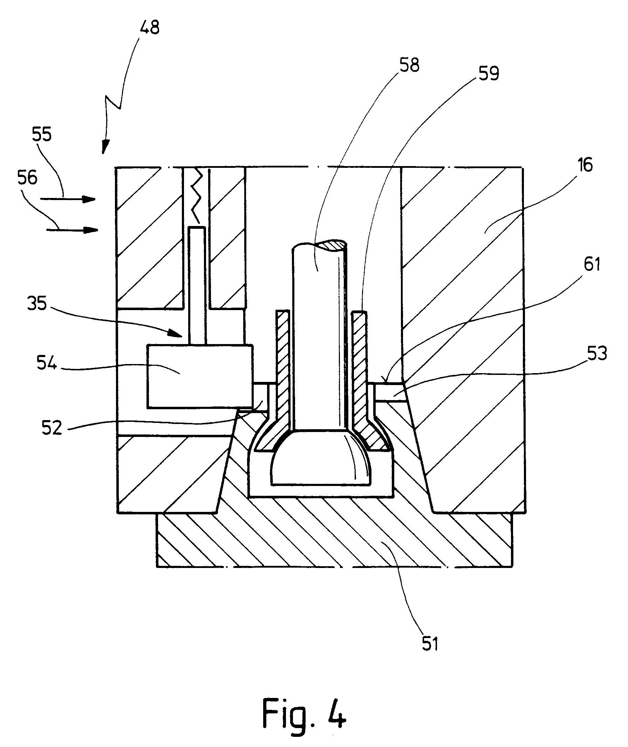

In Fig. 4 ist in einem alternativen Ausführungsbeispiel ein Schnitt durch eine Spindel 16 einer Werkzeugmaschine 10 gezeigt, bei der Werkzeughalter 51 mit Hohlschaft nach DIN 69893 verwendet werden. Bei diesem Werkzeughalter 51 befinden sich Mitnehmernuten 52, 53 am Hohlschaft des Werkzeughalters. Auch diese Mitnehmernuten 52, 53 sind unterschiedlich tief ausgebildet, so daß ein federbelasteter Mitnehmer 54 ebenfalls unterschiedlich tief eingreifen kann. Zwei berührungslose Lagesensoren 55, 56 sprechen auf die unterschiedliche Eindringtiefe des Mitnehmers 54 in die Mitnehmernuten 52, 53 an und wirken damit im Ergebnis wie die Näherungsgeber 44, 45 aus den Fig. 1 bis 3.

Lediglich der Vollständigkeit halber sei bemerkt, daß in Fig. 4 mit 58 eine Zugstange bezeichnet ist, die mittels einer bei 59 angedeuteten Spannzange den Werkzeughalter 51 in die Spindel 12 einzieht. Hier ist der Werkzeughalterkegel größer als der Kegel in der Spindelaufnahme, so daß durch Deformation des Werkzeughalterkegels die Überbestimmung überwunden wird.

Während des "Suchlaufes" und des Hochbeschleunigens durch den erwähnten "Mitnahmeeffekt" gleitet der Mitnehmer 54 hier auf einer Stirnfläche 61 entlang, die den Hohlschaft nach oben abschließt.

Bei hochgenauem Arbeiten kann es nun aber darauf ankommen, daß das Werkzeug und die Spindel eine vorgegebene Ausrichtung zueinander haben, damit die z. B. einmal vermessene Auswirkung bei der Überlagerung des Schlages oder unrunden Laufes der Spindel mit dem Schlag oder der Unrundheit des Werkzeuges reproduziert wird. Nur dann ist es nämlich möglich, die sich daraus ergebende Abweichung von dem Nennflugkreis der Außenkontur des Werkzeuges zu berücksichtigen.

Ist dies im Betrieb zu beachten, so kann die Ablaufsteuerung das Werkzeug erneut ausstoßen, die Spindel um 90° drehen und das Werkzeug wieder einziehen, so daß nun die "richtige" Orientierung zwischen Spindel und Werkzeug erreicht wird; aber auch dies wird natürlich überprüft.

Die neue Sensoreinrichtung kann also auch dazu verwendet werden, die Orientierung zwischen Spindel und Werkzeug bei solchen Werkzeughaltern zu korrigieren, bei denen der Mitnehmer in verschiedene Nuten eingreifen kann.

## Patentansprüche

1. Werkzeugmaschine mit einer in einem Spindelstock (12) umlaufenden Spindel (16), mit zumindest einem Greifer (26), der einen Werkzeughalter (18, 51) aus einer ungekuppelten Stellung in eine kuppelbare Stellung in die Spindel (16) einsetzt, und mit Kupplungsmitteln (35) zum Überführen des in der kuppelbaren Stellung befindlichen Werkzeughalters (18, 51) in einen gekuppelten Zustand, in dem der Werkzeughalter (18, 51) drehfest mit der Spindel (16) verbunden ist, wobei eine Sensoreinrichtung (48) zum Erkennen des eingenommenen gekuppelten Zustandes vorgesehen ist, dadurch gekennzeichnet, daß zumindest zwei gekuppelte Zustände vorgesehen sind, die sich bezüglich einer relativen winkelmäßigen Ausrichtung zwischen dem Werkzeughalter (18, 51) und der Spindel (16) voneinander unterscheiden, und daß die Sensoreinrichtung (48) dazu ausgelegt ist, die gekuppelten Zustände voneinander zu unterscheiden.

2. Werkzeugmaschine nach Anspruch 1, dadurch gekennzeichnet, daß die Kupplungsmittel (35) einen an der Spindel (16) gelagerten und zwischen zumindest drei Lagen relativ zu der Spindel (16) verschiebbaren Mitnehmer (32, 54) umfassen, der in einem gekuppelten Zustand des Werkzeughalters (18, 51) in eine der an diesem vorgesehenen Ausnehmungen (25, 24, 24'; 52, 53) eingreift, und daß die Sensoreinrichtung (48) die relative Lage des Mitnehmers (32, 54) zu der Spindel (16) erkennt, wobei der Mitnehmer (32, 54) in die verschiedenen Ausnehmungen (25, 24, 24'; 52, 53) unterschiedlich, vorzugsweise unterschiedlich weit eingreift.

3. Werkzeugmaschine nach Anspruch 1 oder 2, dadurch gekennzeichnet, daß die Sensoreinrichtung (48) zumindest einen mit der Spindel (16) umlaufenden Signalgeber (31) umfaßt.

4. Werkzeugmaschine nach Anspruch 3, dadurch gekennzeichnet, daß die Sensoreinrichtung (48) eine dem Signalgeber (31) zugeordnete Erfassungseinrichtung (42) aufweist, die bezüglich des Spindelstockes (12) drehfest angeordnet ist.

5. Werkzeugmaschine nach Anspruch 4, dadurch gekennzeichnet, daß die Erfassungseinrichtung (42) in jeder relativen Winkellage zwischen der Spindel (16) und dem Spindelstock (12) auf den Signalgeber (31) anspricht.

6. Werkzeugmaschine nach einem der Ansprüche 3 bis 5, dadurch gekennzeichnet, daß der Signalgeber (31) eine längsverschieblich an der Spindel (16) gelagerte Signalstange (30) aufweist, die dem Mitnehmer (32) zugeordnet ist, und die der zu der Spindel (16) relativen Bewegung des Mitnehmers (32) folgt.

7. Werkzeugmaschine nach einem der Ansprüche 2 bis 6, dadurch gekennzeichnet, daß eine Erfassungseinrichtung (42) mit zumindest zwei Signalgebern (43, 44, 55, 56) vorgesehen ist, die das unterschiedliche Eingreifen des Mitnehmers (32, 54) in die Ausnehmungen (25, 24, 24', 52, 53) erfaßt.

8. Werkzeugmaschine nach einem der Ansprüche 1 bis 7, dadurch gekennzeichnet, daß die Sensoreinrichtung (48) einen zu der Spindel (16) konzentrischen Signalring (39) aufweist, der an der Spindel (16) axial gelagert ist und der mit den Kupplungsmitteln (35) derart zusammenwirkt, daß der Signalring (39) bei in kuppelbarer Stellung befindlichem Werkzeughalter (18) eine axial erste Stellung einnimmt und kontinuierlich mit zumindest zwei ortsfesten Meßwertaufnehmern (43, 44) zusammenwirkt, daß der Signalring (39) bei in einem ersten gekuppelten Zustand befindlichem Werkzeughalter (18) eine axial zweite Stellung einnimmt und kontinuierlich mit den ortsfesten Meßwertaufnehmern (43, 44) zusammenwirkt, und daß der Signalring (39) bei in einem zweiten gekuppelten Zustand befindlichem Werkzeughalter (18) eine axial dritte Stellung einnimmt und mit den ortsfesten Meßwertaufnehmern zusammenwirkt.

## Claims

1. A machine tool, comprising a spindle (16) rotating in a headstock (12), at least one gripper (26) for inserting a tool holder (18, 51) from an uncoupled position into a ready-to-couple position within said spindle (16), and a coupling mechanism (35) for transferring the tool holder (18, 51) being in the ready-to-couple position into a coupled state in which the tool holder (18, 51) is connected to the spindle (16) for rotation therewith, sensor means (48) being provided for detecting whether the coupled state has been achieved,
characterized in that at least two coupled states are provided which differ from one another with respect to a relative angular alignment between the tool holder (18, 51) and the spindle (16), and that the sensor means (48) is arranged to differentiate said coupled states from one another.

2. The machine tool of claim 1, characterized in that the coupling means (35) comprise a catch (32, 54) supported on said spindle (16) and displaceable relative to said spindle (16) between at least three positions, said catch engaging in one of the recesses (25, 24, 24'; 52, 53) provided at the tool holder (18, 51) when the latter is in a coupled state, and that the sensor means (48) detects the relative position of the catch (32, 34) with respect to the spindle (16), whereby the catch (32, 54) engages in a different manner in the different recesses (25, 24, 24'; 52, 53), preferably to different depths.

3. The machine tool of claim 1 or 2, characterized in that the sensor means (48) comprises at least one signal transmitter (31) rotating together with the spindle (16).

4. The machine tool of claim 3, characterized in that the sensor means (48) comprises a detector means (42) associated with the signal transmitter (31), the detector means being fixed against rotation relative to the headstock (12).

5. The machine tool of claim 4, characterized in that the detector means (42) responds to the signal transmitter (31) in any relative angular alignment between the spindle (16) and the headstock (12).

6. The machine tool of any of claims 3 - 5, characterized in that the signal transmitter (31) comprises a signal rod (30) mounted on the spindle (16) for longitudinal displacement thereon, said signal rod being related to the catch (32) and following the relative movement of the catch (32) with respect to the spindle (16).

7. The machine tool of any of claims 2 - 6, characterized in that there is provided a detector means (42) having at least two signal transmitters (43, 44, 55, 56) which detect the different engagement of the catch (32, 54) in the recesses (25, 24, 24'; 52, 53).

8. The machine tool of any of claims 1 - 7, characterized in that the sensor means (48) comprises a signal ring (39) arranged concentrically to said spindle (16) and being mounted axially on the spindle (16), the signal ring (39) coacting with the coupling means (35) such that with a tool holder (18) in a ready-to-couple position the signal ring (39) is in a first axial position and continuously coacts with at least two fixed transducers (43, 44), with a tool holder (18) in a first coupled state, the signal ring (39) is in a second axial position and continuously coacts with said transducers, and with a tool holder (18) in a second coupled state the signal ring (39) is in a third axial position and coacts with said transducers.

## Revendications

1. Machine-outil comportant une broche (16) tournant dans une poupée porte-broche (12), au moins un préhenseur (26), qui insère un porte-outil (18, 51) dans la broche (16), d'une position non accouplée dans une position accouplable, et des moyens d'accouplement (35) pour le transfert du porte-outil (18, 51) se trouvant dans la position accouplable dans un état accouplé, dans lequel le porte-outil (18, 51) est solidaire en rotation de la broche (16), un dispositif à capteur (48) étant prévu pour la détection de l'état accouplé pris, caractérisée en ce que sont prévus au moins deux états accouplés, qui diffèrent l'un de l'autre en ce qui concerne une orientation angulaire relative entre le porte-outil (18, 51) et la broche (16), et en ce que le dispositif à capteur (48) est conçu pour distinguer l'un de l'autre les états accouplés.

2. Machine-outil selon la revendication 1, caractérisée en ce que les moyens d'accouplement (35) comportent un entraîneur (32, 54), monté sur la broche (16), et pouvant coulisser entre au moins trois positions par rapport à la broche (16), entraîneur qui dans un état accouplé du porte-outil (18, 51) s'engage dans l'un des évidements (25, 24, 24' ; 52, 53) prévus sur celui-ci, et en ce que le dispositif à capteur (48) détecte la position relative de l'entraîneur (32, 54) par rapport à la broche (16), l'entraîneur (32, 54) s'engageant différemment, de préférence différemment loin, dans les différents évidements (25, 24, 24' ; 52, 53).

3. Machine-outil selon la revendication 1 ou 2, caractérisée en ce que le dispositif à capteur (48) comprend au moins un transmetteur de signaux (31) tournant avec la broche (16).

4. Machine-outil selon la revendication 3, caractérisée en ce que le dispositif à capteur (48) comprend un dispositif de détection (42) qui est associé au transmetteur de signaux (31) et est placé fixement en rotation par rapport à la poupée porte-broche (12).

5. Machine-outil selon la revendication 4, caractérisée en ce que le dispositif de détection (42) réagit au transmetteur de signaux (31), dans toute position angulaire relative entre la broche (16) et la poupée porte-broche (12).

6. Machine-outil selon l'une des revendications 3 à 5, caractérisée en ce que le transmetteur de signaux (31) comporte une tige de signal (30), montée de manière à coulisser longitudinalement sur la broche (16), qui est associée à l'entraîneur (32) et qui suit le déplacement relatif de l'entraîneur (32), par rapport à la broche (16).

7. Machine-outil selon l'une des revendications 2 à 6, caractérisée en ce qu'est prévu un dispositif de détection (42) avec au moins deux transmetteurs de signaux (43, 44, 55, 56), qui détecte l'engagement différent de l'entraîneur (32, 54) dans les évidements (25, 24, 24', 52, 53).

8. Machine-outil selon l'une des revendications 1 à 7, caractérisée en ce que le dispositif à capteur (48) comporte un anneau de signal (39), concentrique à la broche (16), qui est monté axialement sur la broche (16) et qui coopère avec les moyens d'accouplement (35) de manière que l'anneau de signal (39) prenne une première position axiale et coopère en continu avec au moins deux capteurs de valeur de mesure (43, 44) stationnaires, lorsque le porte-outil (18) se trouve en position accouplable, en ce que l'anneau de signal (39) prend une deuxième position axiale et coopère en continu avec les capteurs de valeur de mesure (43, 44) stationnaires, dans un premier état accouplé, et en ce que l'anneau de signal (39) prend une troisième position axiale et coopère avec les capteurs de valeur de mesure stationnaires, lorsque le porte-outil (18) se trouve dans un deuxième état accouplé.
